# FASCICULE DE BREVET EUROPEEN

(11) **EP 0 671 861 B1**
(45) Date de publication et mention de la délivrance du brevet: **31.10.2001**
(21) Numéro de dépôt: 95400274.7
(22) Date de dépôt: 10.02.1995
(51) Int. Cl.: H04Q 11/04, H04N 7/173

(54) **Procédé et dispositif pour la distribution d'information "multimédia"**
Verfahren und Anlage zur Verteilung von Multimediainformation
Method and apparatus for distribution of multimedia information

(30) Priorité: 25.02.1994 FR 9402311
(43) Date de publication de la demande: 13.09.1995
(73) Titulaire: SEXTANT AVIONIQUE, 92366 Meudon la Forêt Cédex (FR)
(72) Inventeur: Sannino, Christian, F-78125 Vieille Eglise (FR)
(74) Mandataire: de Saint-Palais, Arnaud Marie

(56) Documents cités:
- EP-A- 0 277 014
- EP-A- 0 355 697
- EP-A- 0 579 980

## Description

La présente invention concerne un procédé et un dispositif pour la distribution d'informations "multimédia", notamment à bord d'un véhicule tel que par exemple un aéronef.

On sait que pour effectuer une telle distribution, on a déjà proposé, par la demande de brevet N° EP-A-277014, un système faisant intervenir un appareil pour la transmission d'une pluralité de signaux vidéos et audios à destination d'une pluralité de terminaux situés à proximité des sièges de passagers d'un véhicule, par exemple un avion, un train ou un bus.

Par ailleurs, la demande de brevet N° EP-A-355697 propose un système d'émission multimédia bidirectionnel permettant à un opérateur de sélectionner un mode d'insertion de publicité à l'intérieur des programmes qu'il a choisi, le résultat de la redevance étant fonction du mode sélectionné.

Il s'avère que dans un cas comme dans l'autre l'utilisateur d'un terminal reste tributaire des programmes fixés par le propriétaire du réseau de distribution, et ne peut donc pas composer son propre programme.

L'invention a donc plus particulièrement pour but de supprimer ces inconvénients.

Elle propose à cet effet un système de distribution permettant d'obtenir au moins les deux types de services suivants :
- un service de "diffusion vidéo" permettant à un utilisateur qui dispose d'un périphérique approprié, de sélectionner le programme vidéo qu'il souhaite visualiser, parmi un nombre déterminé de programmes proposés, comme dans le cas des solutions antérieures précédemment évoquées et,
- un service de "distribution vidéo" selon lequel l'utilisateur peut composer son propre programme vidéo, en établissant un "canal virtuel" entre son périphérique et un serveur vidéo.

L'invention a plus particulièrement pour but de parvenir à ces résultats grâce à un système présentant, entre autres, les caractéristiques suivantes :
- l'utilisation d'une technologie entièrement numérique,
- une modularité autorisant, sur une même base de matériel, plusieurs configurations de performances différentes,
- une transparence vis-à-vis des technologies de stockage et de génération d'images vidéo,
- une aptitude à exécuter et à accueillir de nouveaux services,
- une possibilité de connexion vers les autres systèmes de gestion d'information de l'aérodyne (librairie électroniqùe, système de gestion du vol).

En vue d'obtenir ces résultats, l'invention propose un procédé mettant en oeuvre un réseau de distribution d'informations entre un serveur vidéo (apte à délivrer une multiplicité de programmes préétablis) et une pluralité de périphériques de réception et de dialogue à l'usage d'utilisateurs. Ce réseau est basé sur la transmission de blocs ou "cellules" de données numériques, par exemple selon le modèle ATM ("Asynchronous Transfer Mode"), et à associer à chaque cellule une liaison virtuelle ou "canal virtuel" entre la source d'information et la destination de l'information.

Dans le cas où le service que l'utilisateur désire obtenir est de type "diffusion vidéo", le procédé selon l'invention comprend la transmission, à destination de tous les périphériques, de tous les canaux virtuels, l'utilisateur ayant alors à indiquer le canal virtuel correspondant au programme préétabli qu'il souhaite obtenir.

Dans le cas où le service est de type "distribution vidéo", le procédé selon l'invention consiste à associer à chaque utilisateur un canal virtuel grâce auquel l'utilisateur peut accéder et agir individuellement sur les différentes sources, de manière à composer le programme qu'il souhaite visualiser.

Un avantage important du procédé précédemment décrit consiste en ce qu'un même système permet d'assurer un mélange des services de type "diffusion vidéo" et de type "distribution vidéo", et ce grâce à l'utilisation des canaux virtuels de la technique ATM, la seule limitation étant une limitation technologique du. support de stockage vidéo.

Le dispositif pour la mise en oeuvre du procédé précédemment décrit pourra faire intervenir, dans sa configuration la plus simple, un serveur vidéo qui gère les accès à des supports de stockage ou, d'une façon plus générale, à des sources d'informations, qui effectue la mise en cellule des flux de données vidéo, qui reçoit les commandes d'attribution de canaux virtuels, qui affecte les cellules à un canal virtuel et qui multiplexe les canaux virtuels vers une tête de réseau conçue de manière à recevoir les canaux virtuels transportant les données vidéo, à construire le flux de données à transmettre en direction de boîtiers de distribution, à effectuer le routage des canaux virtuels dans le cas où plusieurs têtes de réseau sont présentes, à assurer la gestion et l'attribution des canaux virtuels, et éventuellement à reconfigurer la topologie du réseau global pour passer en mode dégradé.

Le boîtier de distribution est conçu de manière à recevoir les commandes de sélection de canaux virtuels émanant des périphériques auxquels il se trouve rattaché, ainsi que le flux de données vidéo en provenance de la tête de réseau. Il comprend des moyens permettant d'extraire ou de copier les cellules affectées à un canal virtuel lui appartenant, ainsi que de diriger le flux de données du canal virtuel vers le périphérique destinataire. En outre, il est conçu de manière à transmettre les commandes effectuées par l'utilisateur à destination de la tête de réseau à laquelle il se trouve rattaché. Les périphériques de réception et de dialogue comprennent quant à eux des moyens de visualisation et de dialogue pouvant être de type classique.

Des exemples d'exécution de l'invention seront décrits ci-après, à titre d'exemples non limitatifs, avec référence aux dessins annexés dans lesquels :
La figure 1 est une représentation schématique de l'architecture matérielle d'un dispositif pour la distribution d'informations à bord d'un véhicule tel que, par exemple, un aéronef ;
Les figures 2 et 3 sont des représentations schématiques permettant d'illustrer le principe de fonctionnement du dispositif représenté figure 1 en mode diffusion (figure 2) et en mode distribution (figure 3) ;
La figure 4 montre plus en détail l'architecture d'un dispositif (mono-tête de réseau et mono-serveur) configuré en mode diffusion ;
La figure 5 montre plus en détail l'architecture d'un dispositif selon la figure 1, configuré en mode distribution ;
La figure 6 est un schéma d'un dispositif à trois têtes de réseau et à trois serveurs configuré en mode distribution.

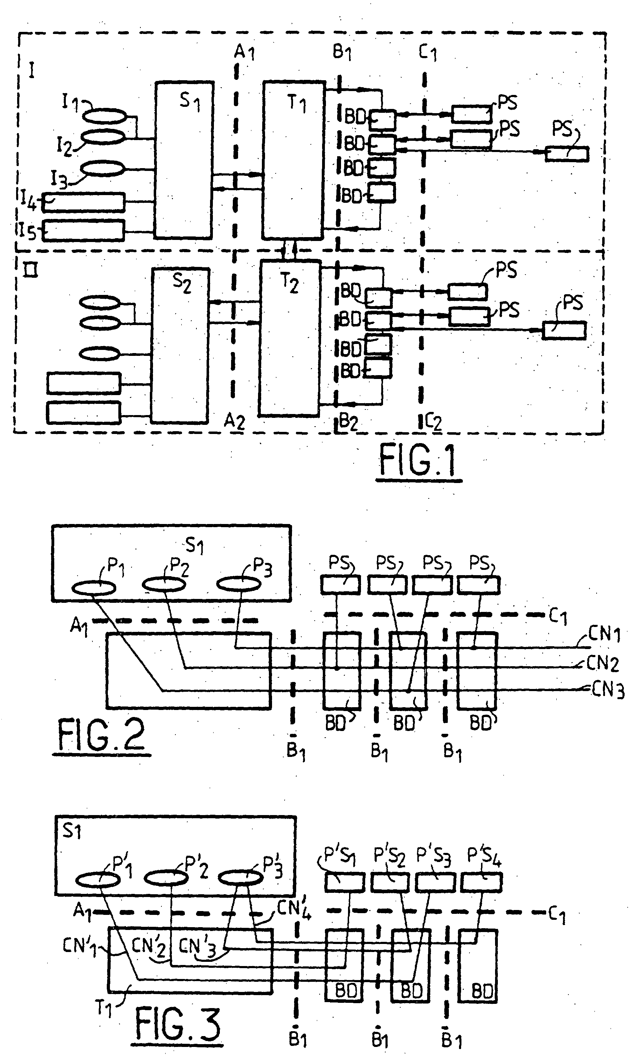

Dans l'exemple représenté sur la figure 1, le système comprend deux dispositifs de structure identique (blocs I, II en traits interrompus) comprenant chacun un serveur vidéo S₁, S₂ couplé à une pluralité de supports d'information I₁ à I₅, tels que des mémoires de type CDROM I₁, I₂, des disques durs I₃ ainsi que des sources d'information I₄ (Radio Diffusion Satellite, "DATALINK" HF, VHF, ... ou même aux différents systèmes de l'aérodyne I₅ tels que ELS, FMS, CCS).

Ce serveur vidéo S₁, S₂ est relié, par l'intermédiaire d'une première interface A₁, A₂ à une tête de réseau T₁, T₂ sur laquelle est connectée, par l'intermédiaire d'une deuxième interface B₁, B₂, une pluralité de boîtiers de distribution BD montés en série.

Chacun de ces boîtiers de distribution BD est relié, par une troisième interface C₁, C₂, à au moins un périphérique PS, par exemple un périphérique associé à chaque siège de l'aérodyne, ce périphérique comprenant un écran de visualisation associé à des moyens de dialogue tels que clavier, surface tactile, etc...

D'une façon générale, le serveur vidéo S₁, S₂ gère les accès aux supports et aux sources d'information I₁ à I₅. Il reçoit le flux de données vidéo compressées provenant de ces sources et de ces supports I₁ à I₅ et effectue la mise en cellule de ces données.

Comme précédemment mentionné, chaque cellule est associée à une liaison virtuelle entre la source d'information et le destinataire ; Il peut s'agir, par exemple de la liaison en mode connexion du modèle de référence "OPEN SYSTEM INTERCONNECTION" défini par la norme ISO 7498. Dans la description du modèle ATM (Asynchronous Transfer Mode), cette liaison est appelée "Canal Virtuel" ("Virtual Channel").

Les images sont transmises compressées, par exemple suivant le codage MPEG (ISO 11172).

Par ailleurs, le serveur vidéo S₁, S₂ reçoit des commandes d'attribution de canaux virtuels émanant des périphériques PS et affecte les cellules à un canal virtuel conformément à ces commandes. Il a en outre la tâche de multiplexer les canaux virtuels vers la première interface A₁, A₂.

Cette dernière définit le format et le protocole des informations transitant entre les serveurs vidéo S₁, S₂ et la tête de réseau T₁, T₂. Typiquement, cette interface A₁ peut consister en une liaison à haut débit présentant, par exemple une capacité de l'ordre de cinquante canaux vidéo virtuels (classe 100 Mb/s).

La tête de réseau T₁, T₂ reçoit les canaux virtuels transportant les données vidéo en provenance du serveur vidéo S₁, S₂. Elle construit le flux de données dirigé vers la deuxième interface B₁, B₂, elle effectue le routage des canaux virtuels dans le cas où plusieurs têtes de réseau T₁, T₂ sont présentes, et elle assure la gestion et l'attribution des canaux virtuels. Elle peut également être conçue de manière à reconfigurer la topologie du réseau global pour passer en mode dégradé.

L'interface B₁, B₂ définit le format et le protocole des informations transitant entre la tête de réseau T₁, T₂ et les boîtiers de distribution BD. Comme pour l'interface A₁, A₂, il s'agit d'une liaison haut débit d'une capacité de l'ordre de cinquante canaux vidéo virtuels (classe 100 Mb/s).

Cette interface B₁, B₂ est uni-directionnelle, la transmission des données, allant du périphérique vers la tête de réseau T₁, T₂ ou le serveur vidéo S₁, S₂, est assurée par le réseau en anneau que constitue l'interconnexion des boîtiers de distribution BD et de la tête de réseau T₁, T₂.

L'interface B₁, B₂ relie également les têtes de réseau T₁, T₂ entre elles.

Par souci d'homogénéité, les interfaces A₁, A₂ et B₁, B₂ ont un même protocole. Toutefois, elles peuvent éventuellement différer par le débit des liaisons physiques.

Le boîtier de distribution BD reçoit les commandes de sélection d'un canal virtuel émises par le périphérique PS, ainsi que le flux de données vidéo provenant de l'interface B₁, B₂. Il extrait ou copie les cellules affectées à un canal virtuel lui appartenant et dirige le flux de données du canal virtuel vers le périphérique PS destinataire, à travers l'interface C₁, C₂. Il formate le flux de données de l'interface B₁, B₂ vers l'interface C₁, C₂ et transmet les commandes utilisateur émises de l'interface C₁, C₂ vers la tête de réseau T₁, T₂ à laquelle il est rattaché, via l'interface B₁, B₂.

L'interface C₁, C₂ définit le format et le protocole des informations transitant entre le boîtier de distribution et un périphérique du siège.

Il peut s'agir d'une liaison bas débit nécessaire à la transmission d'un seul canal virtuel (classe 2 Mb/s). Cette interface est bidirectionnelle.

Le fonctionnement du dispositif précédemment décrit est illustré sur les figures 2 et 3.

En mode "diffusion", chaque programme vidéo est associé à un canal. Tous les périphériques PS sont destinataires de tous les canaux virtuels. Il appartient à l'utilisateur de périphérique PS d'indiquer le canal, et par conséquent, le programme vidéo qu'il souhaite visualiser (comme sur un poste de télévision classique).

Sur la figure 2, le serveur propose trois programmes P₁, P₂, P₃ accessibles par chacun des périphériques, via les boîtiers de distribution, grâce à trois canaux virtuels CN₁, CN₂, CN₃. Il est clair que l'invention ne se limite pas à un tel nombre de canaux. Ainsi, la capacité de l'interface pourra être de N canaux où N est le nombre de programmes vidéo, le nombre N étant généralement limité à une vingtaine de programmes simultanés. Une seule tête de réseau T₁, T₂ peut alors assurer la fonction de diffusion.

En mode "distribution", chaque utilisateur est associé à un canal virtuel personnalisé qu'il établit lors de la composition de son propre programme vidéo pouvant utiliser les sources disponibles P₁ à P₅, entre son périphérique PS et un serveur vidéo S₁. Le déroulement temporel de chaque programme personnalisé est indépendant pour chaque utilisateur ("Video on Demand"). Le nombre de canaux virtuels simultanément ouverts sur un serveur est limité par la technologie de ce serveur et le nombre de canaux virtuels supportés par les interfaces A₁, A₂ et B₁, B₂.

Sur la figure 3, on a représenté quatre canaux virtuels CN'₁ à CN'₄ reliant respectivement et individuellement les périphériques P'S₁ et P'S₃ aux sources P'₂ et P'₁ du serveur et les périphériques P'S₂ et P'S₄ à la source P'₃ de ce même serveur S₁.

Bien entendu, d'une façon plus générale, l'interface B₁, B₂ pourra être occupée par M canaux virtuels où M représente le nombre de programmes distribués individuellement aux utilisateurs.

Ce nombre M pourra éventuellement excéder la capacité physique de l'interface B₁, B₂.

Dans ce cas, on devra faire appel à plusieurs têtes de réseau de la façon indiquée sur la figure 1.

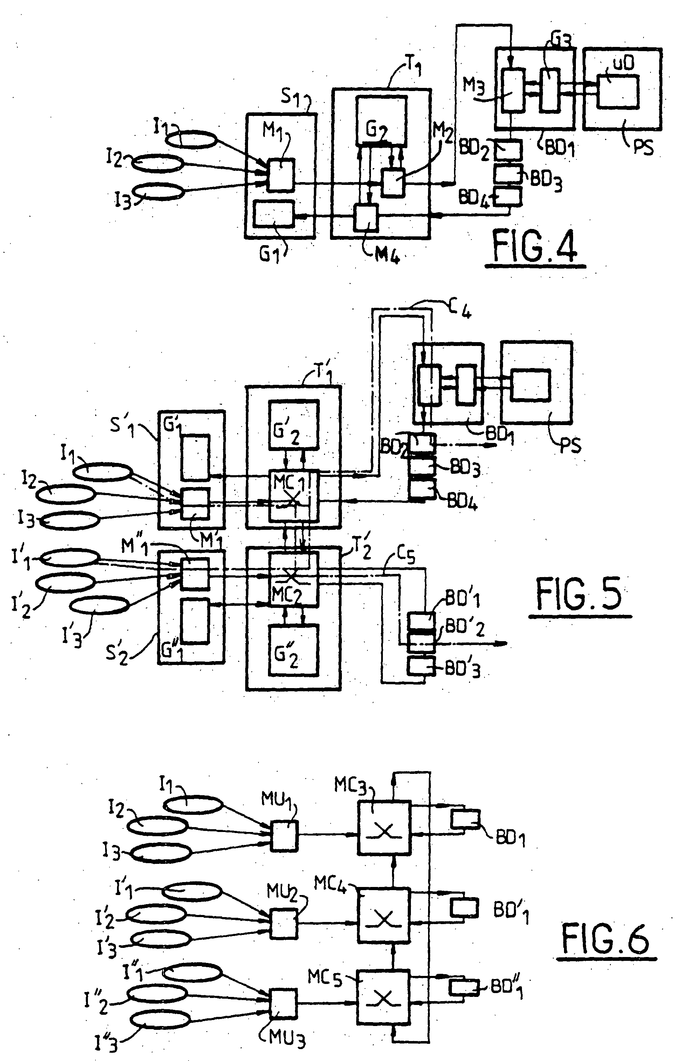

En configuration "diffusion", le serveur vidéo S₁ pourra comprendre, comme représenté sur la figure. 4, un multiplexeur d'insertion M₁ (extraction de "cellules"), ainsi qu'une unité de gestion G₁ du serveur vidéo S₁.

Le multiplexeur M₁ est connecté par ses entrées aux différentes sources d'information (dont seulement trois d'entre elles ont été représentées I₁ à I₃).

Il est connecté par sa sortie à un multiplexeur M₂ du même genre faisant partie de la tête de réseau. Ce multiplexeur M₂ est couplé par une liaison bidirectionnelle à une unité de gestion G₂ de la tête de réseau T₁.

La sortie du multiplexeur M₂ est reliée à l'entrée d'un multiplexeur M₃ faisant partie d'un premier boîtier de distribution BD₁ d'une boucle de boîtiers de distribution BD₁ à BD₄, présentant chacun une structure identique.

Ce multiplexeur M₃ est, en outre, connecté, d'une part, par une liaison bidirectionnelle à une unité de gestion G₃, elle-même connectée par une liaison bidirectionnelle à une unité de décompression vidéo UD d'un périphérique de siège PS associé au boîtier de distribution BD et, d'autre part, par une liaison unidirectionnelle au multiplexeur du boîtier de distribution BD suivant.

Les connexions entre les autres boîtiers de distribution BD₂ à BD₄ successifs de la chaîne, s'effectuent de la même façon, au moyen de liaisons unidirectionnelles.

Le multiplexeur du dernier boîtier de distribution BD₄ est, quant à lui, relié par une liaison unidirectionnelle à un multiplexeur M₄ de la tête de réseau T₁ couplé par une liaison bidirectionnelle à l'unité de gestion G₂. La sortie de ce multiplexeur M₄ est, quant à elle, reliée à l'unité de gestion G₁ du serveur vidéo S₁.

En configuration distribution vidéo, le dispositif peut présenter une structure du type de celle représentée sur la figure 5 comportant plusieurs ensembles comprenant chacun un serveur vidéo S'₁, S'₂, une tête de réseau T'₁, T'₂ et une boucle de boîtiers de distribution BD₁ à BD₄ - BD'₁ à BD'₄ dans laquelle chaque boîtier est associé à au moins un périphérique PS.

Dans cet exemple, chaque serveur vidéo S'₁, S'₂ comprend, comme précédemment, un multiplexeur d'insertion M'₁, M"₁ (extraction de cellules) connecté aux différentes sources d'information I₁ à I₃ - I'₁ à I'₃ et une unité de gestion de serveur vidéo G'₁, G"₁.

Les têtes de réseau T'₁, T'₂ comprennent chacune une matrice de commutation de cellules MC₁, MC₂ pilotée par une unité de gestion G'₂, G"₂ via une liaison bidirectionnelle. Cette matrice MC₁, MC₂ est plus particulièrement conçue de manière à :
- recevoir les informations transmises par le multiplexeur M'₁, M"₁ ainsi que les informations émanant de la chaîne de boîtiers de distribution BD₁ à BD₄, BD'₁ à BD'₃,
- transmettre les informations en provenance des chaînes de boîtier de distribution BD₁ à BD₄ à l'unité de gestion G'₁, G"₁ du serveur vidéo S'₁, S'₂ qui lui est associé, ainsi qu'à sa propre unité de gestion G'₂, G"₂,
- échanger des informations (grâce à une liaison bidirectionnelle) avec la matrice de commutation d'une tête de réseau T'₁, T'₂ d'un autre ensemble.

La commande des matrices de commutation MC₁, MC₂ s'effectue par l'unité de gestion G'₂, G"₂ qui lui est associé, en fonction des informations reçues par cette dernière.

Sur cette figure, on a représenté, par des liaisons C₄ et C₅, deux canaux virtuels mettant en communication une source d'information de l'un des ensembles avec un périphérique appartenant à l'autre ensemble.

La figure 6 montre un mode d'exécution d'un réseau comprenant trois ensembles comportant chacun un serveur vidéo (dont seul le multiplexeur MU₁ à MU₃ a été représenté) couplé à une pluralité de sources d'informations I₁ à I₃, I'₁ à I'₃, I"₁ à I"₃, une tête de réseau (dont seule la matrice de commutation MC₃, MC₄, MC₅ a été représentée), et une boucle de boîtiers de distribution BD₁, BD'₁, BD"₁ (dont un seul a été représenté pour des raisons de simplification).

Dans ce cas, les matrices de commutation de cellules MC₃, MC₄, MC₅ ne sont pas connectées entre elles par des liaisons bidirectionnelles mais par des liaisons uni-directionnelles agencées de manière à constituer une boucle de matrices.

Comme précédemment mentionné, l'application de base du système précédemment décrit est la distribution de programmes vidéo à bord d'un véhicule tel qu'un aérodyne. Toutefois, l'invention ne se limite pas à ce type d'application. En effet, ce système permet en outre d'établir des dialogues interactifs entre l'usager d'un périphérique et une multiplicité de sources d'information pouvant être éventuellement gérées par des processeurs.

En fait, la structure numérique des informations distribuées autorise tout type d'extension du système vers des échanges autres que vidéo, tels que par exemple des transferts de fichiers informatiques, l'envoi de facsimilé, la transmission d'informations diverses pouvant éventuellement concerner le vol de l'aérodyne, la météo, ou même des messages destinés aux passagers.

Par ailleurs, la modularité du système permet d'envisager des configurations offrant selon un critère tel que, par exemple la classe du passager, un mode diffusion ou un mode distribution.

Ceci est rendu possible notamment du fait que, vu du réseau de distribution (c'est-à-dire des interfaces A et B), il n'y a aucune différence entre les canaux virtuels associés à un programme et ceux associés à un utilisateur.

Grâce à ces dispositions, ce système possède une très grande souplesse d'utilisation et d'importantes possibilités d'évolution, critères très recherchés par les clients de ces systèmes, par exemple les compagnies aériennes.

En particulier, la complexité des configurations autorisées par ces systèmes, peut s'accroître en fonction de la disponibilité des technologies utilisées grâce au découpage fonctionnel proposé (serveur/tête de réseau/boîtier de distribution), et à la standardisation des interfaces.

## Revendications

1. Procédé pour la distribution d'informations pouvant provenir d'une multiplicité de sources (I₁ à I₅), à une multiplicité d'utilisateurs, selon au moins un premier mode permettant à un utilisateur de sélectionner un programme de diffusion parmi un nombre déterminé de programmes proposés, ce procédé mettant en oeuvre un réseau de transmission d'informations entre au moins un serveur (S₁) connecté auxdites sources (I₁ à I₅) et une pluralité de périphérique de réception et de dialogue (PS) à l'usage des utilisateurs, les informations émanant desdites sources (I1 à I₅) étant transmises par le réseau à destination des utilisateurs, sous la forme d'une succession de blocs ou "cellules" de données numériques, qui sont chacune associées à une liaison virtuelle, dite canal virtuel, entre au moins une source d'information (I₁ à I₅) et la destination de l'information, de manière à ce que dans le susdit premier mode, chaque canal virtuel (CN₁ à CN₃) soit associé à un programme respectif, tous les canaux virtuels (CN₁ à CN₃) étant transmis à destination de tous les utilisateurs, de manière à ce que ce dernier puisse choisir le programme qu'il souhaite obtenir,
**caractérisé en ce qu'**il comprend un deuxième mode de distribution permettant aux utilisateurs de composer leurs propres programmes à partir des informations mises à leur disposition par les sources, et **en ce que**, dans ce second mode, un canal virtuel (CN'₁ à CN'₄) est associé à chaque utilisateur, grâce auquel cet utilisateur peut accéder et agir individuellement sur les différentes sources (I₁ à I₅) de manière à composer le programme qu'il souhaite visualiser.

2. Procédé selon la revendication 1,
**caractérisé en ce que** la susdite transmission de cellules de données numériques s'effectue selon le modèle ATM.

3. Procédé selon l'une des revendications précédentes,
**caractérisé en ce qu'**il comprend le mélange des deux susdits modes sur un même réseau.

4. Dispositif pour la distribution d'informations pouvant provenir d'une multiplicité de sources (I₁ à I₅), à des utilisateurs, selon d'une part un premier mode permettant à un utilisateur de sélectionner un programme de diffusion parmi un nombre déterminé de programmes proposés, ce dispositif comportant un réseau de transmission d'informations entre au moins un serveur (S₁) connecté auxdites sources (I₁ à I₅) et une pluralité de périphérique de réception et de dialogue (PS) à l'usage des utilisateurs, les informations émanant desdites sources (I₁ à I₅) étant transmises par le réseau à destination des utilisateurs, sous la forme d'une succession de blocs ou "cellules" de données numériques, qui sont chacune associées à une liaison virtuelle, dite canal virtuel, entre au moins une source d'information (I₁ à I₅) et la destination de l'information, de manière à ce que dans le susdit premier mode, chaque canal virtuel (CN₁ à CN₃) soit associé à un programme respectif, tous les canaux virtuels (CN₁ à CN₃) étant transmis à destination de tous les utilisateurs, de manière à ce que ce dernier puisse choisir le programme qu'il souhaite obtenir, et d'autre part, un deuxième mode de distribution permettant aux utilisateurs de composer leurs propres programmes à partir des informations mises à leur disposition par les sources, un canal virtuel (CN'₁ à CN'₄) étant associé à chaque utilisateur, grâce auquel cet utilisateur peut accéder et agir individuellement sur les différentes sources (I₁ à I₅) de manière à composer le programme qu'il souhaite visualiser,
**caractérisé en ce que** le réseau comprend :
- un serveur vidéo (S₁, S₂) comportant des moyens de gestion des accès à des sources d'information (I₁ à I₅), des moyens de mise en cellule des flux de données vidéo émanant de ces sources (I₁ à I₅), des moyens de réception des commandes d'attribution de canaux virtuels, des moyens de collecte des cellules à un canal virtuel et des moyens de multiplexage des canaux virtuels vers une tête de réseau (T₁, T₂),
- ladite tête de réseau (T₁, T₂) qui comporte des moyens de réception des canaux virtuels transportant les données vidéo, des moyens de construction du flux de données à transmettre en direction de boîtiers de distribution (BD), des moyens de réalisation du routage des canaux virtuels dans le cas où plusieurs têtes de réseau (T₁, T₂) sont présentes, des moyens de gestion et d'attribution des canaux virtuels,
- lesdits boîtiers de distribution (BD) comprenant chacun des moyens de commande de sélection de canaux virtuels émanant des périphériques (PS) auxquels ils se trouvent rattachés, ainsi que le flux de données vidéo en provenance de la tête de réseau (T₁, T₂), des moyens d'extraction ou de copiage les cellules affectées à un canal virtuel lui appartenant, et des moyens d'aiguillage du flux de données du canal virtuel vers le périphérique destinataire (PS), ainsi que des moyens de transmission des commandes effectuées par l'utilisateur à destination de la tête de réseau (T₁, T₂) à laquelle il se trouve rattaché.
- lesdits périphériques (PS) qui comprennent des moyens de visualisation et de dialogue pouvant être de type classique.

5. Dispositif selon la revendication 4,
**caractérisé en ce que** le flux de données vidéo provenant des sources (I₁ à I₅) est compressé.

6. Dispositif selon l'une des revendications 4 et 5,
**caractérisé en ce qu'**entre le serveur vidéo (S₁, S₂) et la tête de réseau (T₁, T₂), il comprend une première interface (A) définissant le format et le protocole des informations transitant entre le serveur (S₁, S₂) et la tête (T₁, T₂).

7. Dispositif selon l'une des revendications 4 à 6,
**caractérisé en ce qu'**il comprend entre la tête de réseau et les boîtiers de distribution (BD), une deuxième interface (B₁, B₂) qui définit le format et le protocole des informations transitant entre la tête de réseau (T₁, T₂) et les boîtiers de distribution (BD).

8. Dispositif selon la revendication 7,
**caractérisé en ce que** l'interconnexion des boîtiers de distribution (BD) et de la. tête de réseau (T₁, T₂) constitue un réseau en anneau.

9. Dispositif selon la revendication 7,
**caractérisé en ce que** la deuxième interface (B₁, B₂) relie également plusieurs têtes de réseau (T₁, T₂) entre elles.

10. Dispositif selon l'une des revendications 4 à 9,
**caractérisé en ce que** les premières et deuxièmes interfaces (A₁, A₂ - B₁, B₂) ont un même protocole.

11. Dispositif selon la revendication 4,
**caractérisé en ce que** les têtes de réseau (T₁) comprennent chacune un multiplexeur (M₂) piloté par une unité de gestion (G₂).

12. Dispositif selon la revendication 4,
**caractérisé en ce qu'**il comprend deux têtes de réseau (T'₁, T'₂) comportant chacune une matrice de commutation (MC₁, MC₂) pilotée par une unité de gestion (G'₂, G"₂), les deux matrices de commutation (MC₁, MC₂) étant couplées par une liaison unidirectionnelle de sens opposés.

13. Dispositif selon la revendication 4,
**caractérisé en ce qu'**il comprend au moins trois têtes de réseau comportant chacune une matrice de commutation (MC₃, MC₄, MC₅) pilotée par une unité de gestion, les trois matrices de commutation (MC₃, MC₄, MC₅) étant interconnectées par des liaisons unidirectionnelles de manière à constituer une boucle.

## Patentansprüche

1. Verfahren zur Verteilung von Informationen, die von mehreren Quellen (I₁ bis I₅) stammen können, an mehrere Benutzer gemäß mindestens einem ersten Modus, der es einem Benutzer gestattet, ein Übertragungsprogramm unter einer bestimmten Anzahl vorgeschlagener Programme auszuwählen, wobei dieses Verfahren mit einem Netz zur Übertragung von Informationen zwischen mindestens einem Server (S₁), der an die Quellen (I₁ bis I₅) angeschlossen ist, und mehreren Empfangs- und Dialog-Peripheriegeräten (PS) zur Benutzung durch die Benutzer arbeitet und die Informationen, die von den Quellen (I₁ bis I₅) stammen, durch das Netz an die Benutzer in Form einer Reihe von Blöcken oder "Zellen" numerischer Daten übertragen werden, die jeweils einer virtuellen Verbindung zugeordnet sind, die als virtueller Kanal bezeichnet wird, zwischen mindestens einer Informationsquelle (I₁ bis I₅) und dem Ziel der Information, damit im vorgenannten ersten Modus jeder virtuelle Kanal (CN₁ bis CN₃) einem entsprechenden Programm zugeordnet ist, wobei alle virtuellen Kanäle (CN₁ bis CN₃) an alle Benutzer übertragen werden, damit letzterer das Programm wählen kann, das er zu erhalten wünscht,
**dadurch gekennzeichnet, daß** es einen zweiten Verteilermodus aufweist, der es den Benutzern gestattet, ihre eigenen Programme anhand der ihnen von den Quellen zur Verfügung gestellten Informationen zu erstellen, und daß in diesem zweiten Modus jedem Benutzer ein virtueller Kanal (CN'₁ bis CN'₄) zugeordnet ist, durch den dieser Benutzer einzeln auf die verschiedenen Quellen (I₁ bis I₅) zugreifen und einwirken kann, um das Programm zu erstellen, das er anzuzeigen wünscht.

2. Verfahren nach Anspruch 1, **dadurch gekennzeichnet, daß** die Übertragung von Zellen numerischer Daten gemäß dem ATM-Modell erfolgt.

3. Verfahren nach einem der vorhergehenden Ansprüche, **dadurch gekennzeichnet, daß** es das Mischen der beiden vorgenannten Modi auf demselben Netz umfaßt.

4. Vorrichtung zur Verteilung von Informationen, die von mehreren Quellen (I₁ bis I₅) stammen können, an Benutzer gemäß einerseits einem ersten Modus, der es einem Benutzer gestattet, ein Übertragungsprogramm unter einer bestimmten Anzahl vorgeschlagener Programme auszuwählen, wobei diese Vorrichtung ein Netz zur Übertragung von Informationen zwischen mindestens einem Server (S₁), der an die Quellen (I₁ bis I₅) angeschlossen ist, und mehreren Empfangs- und Dialog-Peripheriegeräten (PS) zur Benutzung durch die Benutzer umfaßt, und die Informationen, die von den Quellen (I₁ bis I₅) stammen, durch das Netz an die Benutzer in Form einer Reihe von Blöcken oder "Zellen" numerischer Daten übertragen werden, die jeweils einer virtuellen Verbindung zugeordnet sind, die als virtueller Kanal bezeichnet wird, zwischen mindestens einer Informationsquelle (I₁ bis I₅) und dem Ziel der Information, damit im vorgenannten ersten Modus jeder virtuelle Kanal (CN₁ bis CN₃) einem entsprechenden Programm zugeordnet ist, wobei alle virtuellen Kanäle (CN₁ bis CN₃) an alle Benutzer übertragen werden, damit letzterer das Programm wählen kann, das er zu erhalten wünscht, und andererseits einem zweiten Verteilermodus, der es den Benutzern gestattet, ihre eigenen Programme anhand der ihnen von den Quellen zur Verfügung gestellten Informationen zu erstellen, wobei jedem Benutzer ein virtueller Kanal (CN'₁ bis CN'₄) zugeordnet ist, durch den dieser Benutzer einzeln auf die verschiedenen Quellen (I₁ bis I₅) zugreifen und einwirken kann, um das Programm zu erstellen, das er anzuzeigen wünscht,
**dadurch gekennzeichnet, daß** das Netz folgendes aufweist:
- einen Videoserver (S₁, S₂) mit Mitteln zur Steuerung der Zugriffe auf Informationsquellen (I₁ bis I₅), Mitteln zur Zellenbildung aus den Videodatenströmen, die von diesen Quellen (I₁ bis I₅) stammen, Mitteln zum Empfang der Befehle zur Zuordnung virtueller Kanäle, Mitteln zum Sammeln der Zellen auf einem virtuellen Kanal und Mitteln zum Multiplexing der virtuellen Kanäle zu einer Kopfstation (T₁, T₂) hin,
- die Kopfstation (T₁, T₂), der Mittel zum Empfang der virtuellen Kanäle, welche die Videodaten übertragen, Mittel zum Aufbau des an Anschlußkästen (BD) zu übertragenden Datenstroms, Mittel zur Durchführung des Routings der virtuellen Kanäle für den Fall, daß mehrere Kopfstationen (T₁, T₂) vorhanden sind, und Mittel zur Steuerung und Zuordnung der virtuellen Kanäle aufweist,
- die Anschlußkästen (BD), die jeweils Mittel zur Steuerung der Auswahl virtueller Kanäle, die von den Peripheriegeräten (PS) stammen, an die sie angeschlossen sind, sowie den Videodatenfluß, der von der Kopfstation (T₁, T₂) stammt, Mittel zur Rückgewinnung oder zum Kopieren der Zellen, die einem ihm zugehörigen virtuellen Kanal zugeordnet sind, und Mittel zur Verzweigung des Datenstroms des virtuellen Kanals zum Ziel-Peripheriegerät (PS), sowie Mittel zur Übertragung der durch den Benutzer ausgeführten Befehle zur Kopfstation (T₁, T₂), an den er angeschlossen ist, aufweisen,
- die Peripheriegeräte (PS), die Mittel zur Anzeige und zum Dialog umfassen, die herkömmlicher Art sein können.

5. Vorrichtung nach Anspruch 4, **dadurch gekennzeichnet, daß** der von den Quellen (I₁ bis I₅) stammende Videodatenstrom komprimiert ist.

6. Vorrichtung nach einem der Ansprüche 4 und 5, **dadurch gekennzeichnet, daß** sie zwischen dem Videoserver (S₁, S₂) und der Kopfstation (T₁, T₂) eine erste Schnittstelle (A) aufweist, die das Format und das Protokoll der zwischen dem Server (S₁, S₂) und dem Kopf (T₁, T₂) übertragenen Informationen definiert.

7. Vorrichtung nach einem der Ansprüche 4 bis 6, **dadurch gekennzeichnet, daß** sie zwischen der Kopfstation und den Anschlußkästen (BD) eine zweite Schnittstelle (B₁, B₂) aufweist, die das Format und das Protokoll der zwischen der Kopfstation (T₁, T₂) und den Anschlußkästen (BD) übertragenen Informationen definiert.

8. Vorrichtung nach Anspruch 7, **dadurch gekennzeichnet, daß** die Verbindung zwischen den Anschlußkästen (BD) und der Kopfstation (T₁, T₂) ein Ringnetz bildet.

9. Vorrichtung nach Anspruch 7, **dadurch gekennzeichnet, daß** die zweite Schnittstelle (B₁, B₂) auch mehrere Kopfstationen (T₁, T₂) untereinander verbindet.

10. Vorrichtung nach einem der Ansprüche 4 bis 9, **dadurch gekennzeichnet, daß** die ersten und die zweiten Schnittstellen (A₁, A₂ - B₁, B₂) dasselbe Protokoll aufweisen.

11. Vorrichtung nach Anspruch 4, **dadurch gekennzeichnet, daß** die Kopfstationen (T₁) jeweils einen Multiplexer (M₂) aufweisen, der von einer Steuereinheit (G₂) gesteuert wird.

12. Vorrichtung nach Anspruch 4, **dadurch gekennzeichnet, daß** sie zwei Kopfstationen (T'₁, T'₂) mit jeweils einer Koppelmatrix (MC₁, MC₂) aufweist, die von einer Steuereinheit (G'₂, G"₂) gesteuert wird, wobei die beiden Koppelmatrizen (MC₁, MC₂) durch eine Simplexverbindung mit entgegengesetzten Richtungen verbunden sind.

13. Vorrichtung nach Anspruch 4, **dadurch gekennzeichnet, daß** sie mindestens drei Kopfstationen aufweist, die jeweils eine Koppelmatrix (MC₃, MC₄, MC₅) umfassen, die von einer Steuereinheit gesteuert wird, wobei die drei Koppelmatrizen (MC₃, MC₄, MC₅) durch Simplexverbindungen so miteinander verbunden sind, daß sie eine Schleife bilden.

## Claims

1. A method for the distribution of data that can come from a multiplicity of sources (I₁ to I₅), to a multiplicity of users, according to at least a first mode enabling a user to select a broadcasting program from among a predetermined number of programs proposed, said method using a data transmission network between at least one server (S₁) connected to said sources (I₁ to I₅) and a plurality of receiving and dialog peripherals (PS) for users, the data from said sources (I₁ to I₅) being transmitted to the users, by the network, in the form of a succession of digital data blocks or "cells", which are each associated with a virtual link, referred to as a virtual channel, between at least one data source (I₁ to I₅) and the destination of the data so that, in said first mode, each virtual channel (CN₁ to CN₃) is associated with a respective program, all the virtual channels (CN₁ to CN₃) being transmitted to all the users, so that the latter can choose the program he wishes to obtain,
**characterised in that** it comprises a second distribution mode enabling said users to compose their own programs from the data made available to them by said sources, and wherein, in said second mode, a virtual channel (CN'₁ to CN'₄) is associated with each user, by way of which said user can individually access and act on the different sources (I₁ to I₅) in order to compose the program he wishes to view.

2. The method according to claim 1,
**characterised in that** said transmission of digital data cells is performed according to the ATM model.

3. The method according to one of the preceding claims,
**characterised in that** said method comprising the combination of the two above-mentioned modes in a same network.

4. A device for distribution of data that can come from a multiplicity of sources (I₁ to I₅), to users, on the one hand according to a first mode enabling a user to select a broadcasting program from among a predetermined number of programs proposed, said method using a data transmission network between at least one server (S₁) connected to said sources (I₁ to I₅) and a plurality of receiving and dialog peripherals (PS) for users, the data from said sources (I₁ to I₅) being transmitted to the users, by the network, in the form of a succession of digital data blocks or "cells", which are each associated with a virtual link, referred to as a virtual channel, between at least one data source (I₁ to I₅) and the destination of the data so that, in said first mode, each virtual channel (CN₁ to CN₃) is associated with a respective program, all the virtual channels (CN₁ to CN₃) being transmitted to all the users, so that the latter can choose the program he wishes to obtain, and on other hand, a second distribution mode enabling said users to compose their own programs from the data made available to them by said sources, and wherein, in said second mode, a virtual channel (CN'₁ to CN'₄) is associated with each user, by way of which said user can individually access and act on the different sources (I₁ to I₅) in order to compose the program he wishes to view,
**characterised in that** the network comprises:
- a video server (S₁, S₂) comprising management mean of accessing to data sources (I₁ to I₅), means for carrying out the editing into cells of the video data flows from said sources (I₁ to I₅), receiving means of the orders allocating the virtual channels, collecting means of the cells at a virtual channel and multiplexing means of virtual channels towards a network head end (T₁, T₂),
- said head end (T₁, T₂) which comprises receiving means of said virtual channels transporting said video data, constructing means of the flow of data to be transmitted towards distribution cases (BD), performing means of the routing of said virtual channels in the event of several network head ends (T₁, T₅) are present, management and allocation means of said virtual channels,
- said distribution cases (BD), each one comprising control means of the virtual channel selection coming from the peripherals (PS) to which they are linked, as well as the flow of video data coming from the network head end (T₁, T₂), means enabling the extraction or copying of the cells assigned to a virtual channel belonging to it, and orienting means of said flow of data in said virtual channel to the destination peripheral (PS), further comprising a means enabling the transmission of orders input by the user to said network head end (T₁, T₂) to which it is linked,
- said peripherals (PS) which comprise a viewing and dialog means which can be of a conventional type.

5. The device according to claim 4,
**characterised in that** said flow of video data from the sources (I₁ to I₅) is compressed.

6. The device according to one of the claims 4 and 5,
**characterised in that**, between said video server (S₁, S₂) and said head end (T₁, T₂), it comprises a first interface (A) defining the format and protocol of the data traveling between said server (S₁, S₂) and said head (T₁, T₂).

7. The device according to one of the preceding claims 4 to 6,
**characterised in that** said device comprising, between said head end and said distribution cases (BD), a second interface (B₁, B₂) which defines the format and protocol of the data traveling between said head end (T₁, T₂) and said distribution cases (BD).

8. The device according to claim 7,
**characterised in that** the interconnection between said distribution cases (BD) and said network head end (T₁, T₂) constitutes a ring network.

9. The device according to claim 7,
**characterised in that** said second interface (B₁, B₂) also connects a plurality of network head ends (T₁, T₂) to one another.

10. The device according to one of the claims 4 to 9,
**characterised in that** said first and second interfaces (A₁, A₂ - B₁, B₂) have a same protocol.

11. The device according to claim 4,
**characterised in that** said network head ends (T₁) each comprise a multiplexer (M₂) driven by a management unit (G₂).

12. The device according to claim 4,
**characterised in that** it comprises two network head ends (T'₁, T'₂) each comprising a switching matrix (MC₁, MC₂) driven by a management unit (G'₂, G"₂), said two switching matrices (MC₁, MC₂) exchanging data by means of a two-way link.

13. The device according to claim 4,
**characterised in that** it comprises at least three network head ends each comprising a switching matrix (MC₃, MC₄, MC₅) driven by a management unit, said three switching matrices (MC₃, MC₄, MC₅) being interconnected by one-way links in such a way as to constitute a loop.
